# EUROPÄISCHE PATENTSCHRIFT

(11) **EP 2 850 671 B1**
(45) Veröffentlichungstag und Bekanntmachung des Hinweises auf die Patenterteilung: **26.02.2020**
(21) Anmeldenummer: 13720254.5
(22) Anmeldetag: 08.04.2013
(51) Int. Cl.: H01M 2/02, H01M 2/10, H01M 10/42, H01M 10/48, H01M 2/12, H01M 2/34, H01M 10/44

(54) **GALVANISCHES ELEMENT MIT HÜLLFOLIE, ELEKTROCHEMISCHER SPEICHER, ELEKTROCHEMISCHES SPEICHERSYSTEM UND VERFAHREN ZUM BESTIMMEN EINER ZUSTANDSGRÖßE EINES ELEKTROCHEMISCHEN SPEICHERS**
GALVANIC ELEMENT WITH COVERING FILM, ELECTROCHEMICAL STORAGE DEVICE, ELECTROCHEMICAL STORAGE SYSTEM AND METHOD FOR DETERMINING A PARAMETER OF AN ELECTROCHEMICAL STORAGE DEVICE
ÉLÉMENT GALVANIQUE AVEC FILM ENVELOPPANT, ACCUMULATEUR ÉLECTROCHIMIQUE, SYSTÈME D'ACCUMULATION ÉLECTROCHIMIQUE ET PROCÉDÉ DE DÉTERMINATION D'UNE GRANDEUR D'ÉTAT D'UN ACCUMULATEUR ÉLECTROCHIMIQUE

(30) Priorität: 14.05.2012 DE 102012207999
(43) Veröffentlichungstag der Anmeldung: 25.03.2015
(73) Patentinhaber: Robert Bosch GmbH, 70442 Stuttgart (DE)
(72) Erfinder: SCHNEIDER, Jens, 71229 Leonberg (DE); HAS, Remigius, 71120 Grafenau-Daetzingen (DE); HENRICI, Fabian, 70195 Stuttgart (DE)
(86) Internationale Anmeldenummer: PCT/EP2013/057305
(87) Internationale Veröffentlichungsnummer: WO 2013/171003

(56) Entgegenhaltungen:
- DE-A1-102010 043 710
- JP-A- 2000 340 264
- US-A1- 2006 093 896
- US-A1- 2007 054 157

## Beschreibung

### Stand der Technik

Die vorliegende Erfindung bezieht sich auf eine Hüllfolie für ein galvanisches Element, einen elektrochemischen Speicher, ein elektrochemisches Speichersystem, eine flexible Folie für eine Hülle eines galvanischen Elements und auf ein Verfahren zum Bestimmen einer Zustandsgröße eines elektrochemischen Speichers.

Mit der immer größer werdenden Nachfrage nach alternativen Antriebskonzepten rückt der Elektroantrieb mehr und mehr in den Mittelpunkt der Betrachtung. Hierbei entwickeln sich Lithium-Ionen-Batterien zur Schlüsseltechnologie für moderne Automobilantriebe. Lithium-Ionen-Zellen existieren in verschiedenen Bauformen bzw. Zelltypen. Eine besondere Ausführungsform bilden hier sogenannte Pouch-Zellen (pouch = Beutel) oder Coffeebag-Zellen. Wie die Bezeichnung bereits nahelegt, sind Pouch-Zellen nicht formstabil, ihr Zellwickel ist in einen flexiblen "Foliensack" eingeschweißt.

Das verwendete flexible Gehäuse stellt jedoch systembedingt einige Herausforderungen dar. So muss die Siegelnaht der Zellen über die komplette Lebensdauer der Batterie dicht sein. Dies ist erschwert, weil die Zellen beim Zyklisieren "atmen", also ihre Dicke je nach Ladezustand unterschiedlich ist. Zudem besteht eine wechselnde Druckdifferenz zwischen Zellinnerem und Umgebung aufgrund von Luftdruckschwankungen und dem Atmen der Zellen. Ferner können auch Alterungsprozesse, die sich z. B. in einer Entgasung äußern, zu einem Aufblähen der Pouch-Zelle führen. Dadurch ist der deutliche Gewichtsvorteil, die räumlich sehr effizient mögliche Stapelung und das große Aspektverhältnis, womit Wärme sehr gut nach außen abgeben werden kann, aufgrund des möglichen Aufblähens der Zelle bei Gasentwicklung als sicherheitskritisch zu betrachten. Die Siegelnähte der Zellen können sich somit bei Störfällen und daraus resultierendem Überdruck im Zellinneren unspezifisch öffnen. Im schlimmsten Fall können dabei brennbare Gase wie Elektrolyt oder Zersetzungsprodukte nach außen gelangen, was unter Umständen zu Bränden beziehungsweise Explosionen führen kann. Um diesen sicherheitskritischen Zustand zu überwachen, sind Sensoren für Pouch-Zellen von großer Bedeutung.

Diesbezüglich ist aus der JP 2000340264 A eine Hüllfolie für ein galvanisches Element bekannt, wobei die Hüllfolie mindestens einen Kraftsensor zum Erfassen eines Dehnungszustandes aufweist.

Weiterhin ist aus der US 2006/093896 A1 eine Vorrichtung mit mehreren Sicherheitseinrichtungen bekannt.

### Offenbarung der Erfindung

Vor diesem Hintergrund wird mit der vorliegenden Erfindung ein galvanisches Element mit einer Hüllfolie, ein elektrochemischer Speicher, ein elektrochemisches Speichersystem, und ein Verfahren zum Bestimmen einer Zustandsgröße eines elektrochemischen Speichers gemäß den Hauptansprüchen vorgestellt. Vorteilhafte Ausgestaltungen ergeben sich aus den jeweiligen Unteransprüchen und der nachfolgenden Beschreibung.

Vorgeschlagen wird eine Folie, die für eine messtechnische Erfassung einer physikalischen Größe einer Pouch-Zelle wie z. B. einer mechanischen Spannung, eines Gasdrucks, einer Zelltemperatur etc. funktionalisiert ist. Dazu kann die Folie als ein Sensor, insbesondere ein Kraftsensor, ausgebildet sein bzw. einen Sensor aufweisen und einen Teil einer Hülle der Pouch-Zelle bilden oder auf eine Außen- oder Innenseite der Hülle der Pouch-Zelle aufbringbar sein. Eine oder mehrere der erfassten Messgrößen können in einem entsprechenden erfindungsgemäßen Verfahren z. B. für eine Berechnung des Ladezustands bzw. SOC (State of Charge) und/oder eines Gesundheitszustands bzw. SOH (State of Health) der Zelle genutzt werden, sowie optional zusätzlich für eine sicherheitsrelevante Überprüfung einer Hermitezität (Dichtheit) der Zelle herangezogen werden.

Durch die Detektion der Druckverhältnisse oder mechanischen Verformung der relativ empfindlichen Pouch-Zelle ist eine direkte Aussage über den Ladezustand der Batterie, ihren Gesundheitszustand sowie über ein Vorliegen eines Defekts, z. B. extremer Druckanstieg bzw. Verformung, Undichtigkeit, möglich. So ist z. B. in Hinblick auf den Insassenschutz ein Austausch von Pouchzellen jederzeit möglich, beispielsweise, wenn ein bestimmter Gasdruck in der Zelle überschritten wird. Mit dem hier vorgestellten Ansatz kann die Innendruckmessung bzw. Gasdruckmessung der Pouch-Zelle auch im ausgebauten Zustand der Batterie ausgelesen werden, womit ein sichereres Recycling der Zellen ermöglicht werden kann. Die gemäß dem hier vorgestellten Konzept realisierbare Detektion der mechanischen Verformung der Zelle auf der Außenseite hat den zusätzlichen Vorteil, dass der Sensor nicht dem Elektrolyt ausgesetzt ist und somit nicht separat geschützt werden muss. Hierdurch kann das Packaging dieses Sensors deutlich vereinfacht werden. Ferner kann der Sensor und seine Zuleitungen direkt in einen Herstellungsprozess der Pouch-Zellen integriert werden. Der erfindungsgemäße Sensor bzw. Kraftsensor zeichnet sich durch eine sehr geringe Bauhöhe aus und behindert damit nicht den Ablauf der Zellchemie in der Pouch-Zelle bzw. die Verformung der äußeren Hülle. Da die Zuleitungen mit aufgedruckt werden können, macht der Sensor in dieser speziellen Ausführungsform keinen zusätzlichen Bondprozess erforderlich, wie es bei herkömmlichen Sensoren der Fall ist. Aufgrund der Detektion der Druckverhältnisse ist auch ein kontrollierbares schnelleres Laden und Entladen der Batteriezellen möglich. Wird bei der hier vorgestellten Hüllfolie der Kraftsensor als ein Gasdrucksensor eingesetzt, kann auch eine mögliche Öffnung der Pouch-Zelle - also eine Beschädigung mit Gasdruckverlust - aufgrund von beispielsweise einer Delamination detektiert werden.

Vorteilhafterweise wird eine effiziente und möglichst kostengünstige Messung von mechanischen Spannungen, Drücken oder Kräften, des PH-Werts, einer Halbzellenspannung und/oder von Temperatureinflüssen in bzw. auf Pouch-Zellen durch Funktionalisierung bereits vorhandener Lagen, Einbringung zusätzlicher funktionalisierter Folien oder Bedrucken der inneren oder äußeren Hülle der Pouch-Zelle ermöglicht. Die Messung kann dabei über den Kraftsensor, der z. B. einen Dehnungsmessstreifen (DMS) aufweisen kann, erzielt werden. Bei der Temperaturmessung in der Pouchzelle können für ein genaueres Messergebnis Messungen lokal bzw. Mehrfachmessungen unter Verwendung eines unterteilten Folienarrays in der Zelle vorgenommen werden. Eine Hüllfolie für ein galvanisches Element ist dadurch gekennzeichnet, dass die Hüllfolie mindestens einen Kraftsensor zum Erfassen eines Dehnungszustands der Hüllfolie aufweist.

Die Hüllfolie kann aus einem elastischen und elektrisch isolierenden Material, beispielsweise aus einem geeigneten Kunststoff, gebildet sein. Die Hüllfolie kann z. B. als eine rechteckförmige Tasche ausgebildet sein, die an einer Seite zum Einstecken des galvanischen Elements in die Hüllfolie offen ist. Nach dem Einstecken des galvanischen Elements kann die offene Seite der Tasche so geschlossen werden, dass das galvanische Element fluiddicht, insbesondere gasdicht, von der Hüllfolie umschlossen ist. Unter einem Kraftsensor kann ein Kraftaufnehmer oder eine Messeinrichtunge zur Erfassung von dehnenden Verformungen verstanden werden. Der Kraftsensor kann wie die Hüllfolie elastisch verformbar sein und beispielsweise ausgebildet sein, um eine auf einen Messbereich des Kraftsensors ausgeübte Zugkraft zu erfassen. Der Kraftsensor kann mit zumindest einem Teilbereich der Hüllfolie fest verbunden sein. Aufgrund der festen Verbindung kann sich der Kraftsensor mit einer Dehnung der Hüllfolie ebenfalls dehnen, sodass basierend auf der mit der Dehnung verbundenen erfassten Zugkraft auf den Kraftsensor auf einen Grad der Dehnung und damit einen Dehnungszustand der Hüllfolie rückgeschlossen werden kann. Die Dehnung der Hüllfolie kann auf chemische und/oder physikalische Prozesse in einem Elektrolyt des von der Hüllfolie umfassten galvanischen Elements zurückgeführt werden. Beispielsweise kann eine Einlagerung des Lithiums in den Elektroden zu einer Dehnung führen und entsprechend mittels SOC-Detektion ein Ladezustand des galvanischen Elements bestimmt werden, oder es kann aufgrund von Alterungsprozessen zu einer Gasentwicklung im Elektrolyt kommen, wodurch sich die Hüllfolie aufbläht und ausdehnt, da die Gase aufgrund der Fluiddichtigkeit der Hüllfolie nicht nach außen entweichen können.

Gemäß einer Ausführungsform kann der Kraftsensor einen Dehnungsmessstreifen aufweisen. Der Dehnungsmessstreifen kann sich dadurch auszeichnen, dass er schon bei geringen Verformungen seinen elektrischen Widerstand ändert. Vorteilhafterweise kann so eine Dehnung der Hüllfolie mit geringem Kostenaufwand und dabei besonders schnell und zuverlässig detektiert werden.

Insbesondere kann der Kraftsensor an einer Oberfläche der Hüllfolie angeordnet sein. Dabei kann sich der Kraftsensor an einer Außenseite oder an einer Innenseite der durch die Hüllfolie gebildeten Tasche für das galvanische Element befinden. So kann die Position des Kraftsensors auf einfache Weise auf Spezifikationsanforderungen angepasst werden. So kann der Kraftsensor beispielsweise durch eine Anordnung an der Innenseite der Hüllfolie vor Beschädigung geschützt werden. Hingegen kann mit der Anordnung an der Außenseite ein Kontakt des Sensors mit dem Elektrolyt vermieden und damit eine eventuelle Entzündung des Elektrolyts verhindert werden. Da hier nicht auf die Tatsache geachtet werden muss, dass nur Materialien in die Zelle eingebracht werden dürfen, die die Zellechemie nicht beeinflussen, besteht der Vorteil einer freieren Materialwahl.

Erfindungsgemäß ist der Kraftsensor in einem Mittelbereich der Hüllfolie angeordnet. Mit dem Begriff "Mittelbereich" ist hierbei der mittlere Bereich der Draufsichtsfläche, d.h. der Fläche mit der größten Ausdehnung gemeint, wobei der Kraftsensor nicht zwingend an der Hüllfolie, sondern auch in Normalenrichtung zu dieser im Innenbereich angeordnet sein kann. Zuätzlich ist erfindungegemäß ein weiterer Kraftsensor in einem Randbereich der Hüllfolie angeordnet. Mit Randbereich ist hierbei der, bei Draufsicht auf die Hüllfolie, den Mittelbereich umgebende Bereich gemeint. Dabei ist der Randbereich als ein Durchführungsbereich für mindestens einen elektrischen Kontakt eines galvanischen Elements ausgebildet. So können auf einfache Weise - nämlich durch eine geeignete Platzierung des Kraftsensors bzw. weiteren Kraftsensors - relevante Informationen über verschiedene Zustände des galvanischen Elements gewonnen werden. Ist das galvanische Element z. B. Teil eines Batteriepacks mit eng aneinander liegenden galvanischen Elementen, so lässt sich mit der Anordnung des Kraftsensors in dem Mittelbereich der Hauptseite der Hüllfolie ein sogenanntes Atmen der Zelle und damit eine abwechselnd auftretende Dehnung und Entspannung der Hüllfolie erfassen, was Rückschlüsse auf einen Ladezustand des galvanischen Elements erlaubt. Hingegen erlaubt die Anordnung des weiteren Kraftsensors in dem Randbereich, beispielsweise nahe der Einstecköffnung der durch die Hüllfolie gebildeten Tasche, eine Messung eines Alterszustands bzw. Gesundheitszustands des galvanischen Elements, da hier, wo sich der Druck benachbarter Zellen nicht auf die Hüllfolie auswirkt, eine erfasste Dehnung auf alterungsbedingte Entgasungsprozesse des Elektrolyts hinweisen kann. Somit lassen sich mit identischen Sensoren, die lediglich an verschiedenen Stellen der das galvanische Element umschließenden Hüllfolie angeordnet sind, unterschiedliche Zustände des galvanischen Elements überwachen.

Ferner kann die Hüllfolie eine Sollbruchstelle aufweisen, wobei ein elektrischer Kontakt für eine elektrische Anbindung des Kraftsensors in einem Bereich der Sollbruchstelle angeordnet sein kann. Je nach Anordnung des Kraftsensors an der Innen- oder Außenseite der Hüllfolie kann die Sollbruchstelle einen Durchführungsbereich für den elektrischen Kontakt des Sensors von innen nach außen bilden, oder es kann der elektrische Kontakt außen über die Sollbruchstelle hinweg geführt werden. In beiden Fällen verursacht ein durch eine Dehnung der Hüllfolie bedingtes Bersten der Sollbruchstelle ein Reißen des Kontakts. Beispielsweise kann die Sollbruchstelle im Bereich der Einschuböffnung für das galvanische Element der eine Tasche bildenden Hüllfolie angeordnet sein, durch die z. B. auch weitere Kontakte für die elektrische Anbindung des galvanischen Elements selbst geführt sein können. Mit dieser Ausführungsform eröffnet sich eine zusätzliche Möglichkeit zur Zustandserfassung des galvanischen Elements, indem z. B. durch das Reißen des Sensorkontakts an der Sollbruchstelle ein Warnsignal über einen Gefährdungszustand des galvanischen Elements an ein angebundenes Sicherheitssystem ausgegeben werden kann.

Ein elektrochemischer Speicher zur Umwandlung von chemischer Energie in elektrische Energie weist folgende Merkmale auf:
ein galvanisches Element;
eine Hüllfolie gemäß einer der im Vorangehenden erläuterten Ausführungsformen, wobei die Hüllfolie das galvanische Element umschließt, und wobei der Dehnungszustand der Hüllfolie eine Zustandsgröße des galvanischen Elements repräsentiert.

Zur elektrischen Anbindung des galvanischen Elements kann der elektrochemische Speicher ferner zwei Kontakte, von denen einer als eine Anode und der andere als eine Kathode ausgeführt sein kann, aufweisen. Bei dem galvanischen Element kann es sich beispielsweise um eine Lithium-Ionen-Zelle handeln. Das galvanische Element kann Teil einer sogenannten Coffee-Bag-Zelle oder Pouch-Zelle (pouch = Beutel) sein, die dadurch gekennzeichnet ist, dass sie nicht formstabil ist, also mit der Hüllfolie eine flexible Ummantelung aufweist. In dieser Ausführungsform erhält die Zelle ein geringeres Gewicht und kann platzsparender eingesetzt werden, erfordert jedoch aufgrund der hohen Beanspruchung der Hüllfolie eine besonders zuverlässige Defektüberwachung, die mit dem hier vorgestellten Konzept gewährleistet werden soll. Die Hüllfolie kann wie bereits erläutert als eine Tasche ausgebildet sein, in die beim Herstellungsprozess des elektrochemischen Speichers ein den Elektrolyten aufweisender Zellwickel eingeschoben werden kann und deren Öffnung anschließend verschweißt oder anderweitig fluiddicht geschlossen werden kann. Die Anode und die Kathode können beispielsweise an einer derartigen Verschlussnaht die Hüllfolie durchstoßen und so die elektrische Anbindung des Zellwickels gewährleisten. Bei der durch den Dehnungszustand der Hüllfolie repräsentierten Zustandsgröße kann es sich um einen Wert für einen Ladezustand oder einen Wert für einen Alterungs- bzw. Gesundheitszustand des elektrochemischen Speichers handeln.

Bei dem elektrochemischer Speicher kann ein elektrischer Kontakt des galvanischen Elements mit einem elektrischen Anschluss des Kraftsensors elektrisch leitfähig verbunden sein. Ferner kann ein weiterer elektrischer Kontakt des galvanischen Elements mit einem weiteren elektrischen Anschluss des Kraftsensors elektrisch leitfähig verbunden sein. Vorteilhafterweise kann der Kraftsensor über den oder die Kontakte des galvanischen Elements mit einer Betriebsspannung oder allgemein mit elektrischer Energie versorgt werden. Zusätzlich oder alternativ können Informationen über den oder die Kontakte des galvanischen Elements Informationen oder Daten an den Kraftsensor übertragen werden oder von dem Kraftsensor ausgesendet werden.

Auch kann der elektrochemische Speicher ferner zumindest einen weiteren Sensor, insbesondere einen Temperatursensor, einem PH-Wert-Sensor, einen Halbzellenspannungs-Messsensor oder einen weiteren Kraftsensor aufweisen. Dabei kann der elektrische Kontakt des galvanischen Elements mit einem elektrischen Anschluss des zumindest einen weiteren Sensors elektrisch leitfähig verbunden sein. Somit ist eine Integration von weiteren Sensoren in den elektrochemischen Speicher, beispielsweise einer Pouchzelle, möglich. Der zumindest eine Sensor kann über die Zellspannung versorgt werden. Die Signalkommunikation des zumindest einen Sensors kann über Powerline erfolgen. Gemäß dieser Ausführungsform können vielfältige Messwerte erfassbar gemacht werden, sodass z. B. mithilfe von Redundanzwerten Messergebnisse auf einfache Weise verifiziert werden können.

Ein elektrochemisches Speichersystem zur Umwandlung von chemischer Energie in elektrische Energie weist folgende Merkmale auf:
eine Mehrzahl von im Vorhergehenden erläuterten elektrochemischen Speichern, die in Form eines Stapels angeordnet sind; und
eine Rahmeneinrichtung zum Fixieren einer Position jedes der Mehrzahl von elektrochemischen Speichern in dem Stapel.

Das elektrochemische Speichersystem kann beispielsweise als Akkumulator zum Antrieb eines Elektrofahrzeugs oder Hybridfahrzeugs eingesetzt werden. Dazu kann die stapelartig angeordnete Mehrzahl von elektrochemischen Speichern mithilfe der Rahmeneinrichtung zu einem Batteriepack zusammengefasst werden. Das Batteriepack kann so gestaltet sein, dass die einzelnen elektrochemischen Speicher mit den Hauptseiten der jeweiligen Hüllfolien eng aneinander gepackt sind und sämtliche Kontakte der elektrochemischen Speicher in eine selbe Richtung weisend aus der Rahmeneinrichtung hervorstehen, sodass dort ohne weiteres in dem elektrochemischen Speichersystem erzeugte elektrische Spannung abgegriffen werden kann.

Die vorliegende Erfindung schafft ferner eine flexible Folie für eine Hülle eines galvanischen Elements, wobei die flexible Folie einen Kraftsensor aufweist. Die flexible Folie kann den Kraftsensor auf einer Oberfläche aufweisen. Alternativ kann der Kraftsensor auch in die flexible Folie eingeschweißt sein. Die flexible Folie mit dem Kraftsensor kann beispielsweise in einem gesonderten Herstellungsverfahren gefertigt werden und zur Fertigstellung einer oben beschriebenen Hüllfolie an geeigneter Position an dieser befestigt, beispielsweise aufgeklebt werden. Eine derartige flexible Folie kann einen zusätzlichen Schutz für den Kraftsensor bereitstellen und eine feste Verbindung des Kraftsensors mit der Oberfläche der Hüllfolie verbessern.

Ein Verfahren zum Bestimmen einer Zustandsgröße eines elektrochemischen Speichers zur Umwandlung von chemischer Energie in elektrische Energie, wobei der elektrochemische Speicher ein von einer Hüllfolie umschlossenes galvanisches Element aufweist, umfasst die folgenden Schritte:
Erfassen eines Dehnungszustands der Hüllfolie; und
Ermitteln der Zustandsgröße, basierend auf dem Dehnungszustand.

Einzelne oder alle Schritte des Verfahrens können beispielsweise von einem Steuergerät, das über einen CAN-Bus eines Fahrzeugs mit dem elektrochemischen Speicher verbunden sein kann, durchgeführt werden. Zum Ermitteln der Zustandsgröße kann beispielsweise ein geeigneter Algorithmus eingesetzt werden. Das Steuergerät kann ausgebildet sein, um die Schritte des erfindungsgemäßen Verfahrens in entsprechenden Einrichtungen durchzuführen bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuer- und/oder Datensignale ausgibt. Das Steuergerät kann Schnittstellen aufweisen, die hard- und/oder softwaremäßig ausgebildet sein können. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Erfindungsgemäß wird in dem Schritt des Erfassens ein erster Dehnungszustand in einem Mittelbereich einer Hauptseite der Hüllfolie erfasst und einer zweiter Dehnungszustand in einem Randbereich einer Hauptseite der Hüllfolie erfasst. Entsprechend wird in dem Schritt des Ermittelns eine erste Zustandsgröße basierend auf dem ersten Dehnungszustand ermittelt und eine zweite Zustandsgröße basierend auf dem zweiten Dehnungszustand ermittelt, wobei die erste Zustandsgröße einen Ladezustand des elektrochemischen Speichers repräsentieren kann und die zweite Zustandsgröße einen Alterungszustand des elektrochemischen Speichers repräsentieren kann. Mit einer gleichzeitigen Zustandserfassung an unterschiedlichen relevanten Positionen des elektrochemischen Speichers können Fehlinterpretationen bezüglich einer Ursache für eine Dehnung der Hüllfolie vermieden werden. Ferner können nach einer erfolgreichen Zuordnung von erfassten Messwerten zu dem jeweiligen Zustand geeignete Maßnahmen getroffen werden. So kann bei einem Messwert, der z. B. einen Ladezustand des elektrochemischen Speichers beschreibt, auf aktuell herrschende Druckverhältnisse rückgeschlossen werden und z. B. ein schnelleres Laden bzw. Entladen des elektrochemischen Speichers eingeleitet werden. Ein für das Erfassen des Ladezustands eingesetzter Kraftsensor kann beispielsweise mittig auf einer Hauptseite der Hüllfolie angeordnet sein, wo er im Zusammenspiel der "Atmung" aller Zellen in einem Batteriepack aussagekräftige Dehnungsmesswerte erfassen kann. Andererseits kann mit einem Messwert, der einen Alterungszustand bzw. Gesundheitszustand des elektrochemischen Speichers beschreibt, weil der zugeordnete Kraftsensor in einem von der Zellatmung unbeeinflussten Randbereich angeordnet ist, festgestellt werden, dass der elektrochemische Speicher aufgrund von Entgasungsprozessen bei der nächsten Wartung auszutauschen ist.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert sein kann und zur Durchführung des Verfahrens nach einer der vorstehend beschriebenen Ausführungsformen verwendet wird, wenn das Programmprodukt auf einem Computer oder einer Vorrichtung ausgeführt wird.

Die Erfindung wird nachstehend anhand der beigefügten Zeichnungen beispielhaft näher erläutert. Es zeigen:
- Fig. 1A-1C: Darstellungen unterschiedlicher Ausführungen von Pouch-Zellen;
- Fig. 2: eine perspektivische Darstellung eines elektrochemischen Speichersystems;
- Fig. 3: eine perspektivische Darstellung eines Rahmenelements des elektrochemischen Speichersystems aus Fig. 2;
- Fig. 4A: eine Prinzipdarstellung eines elektrochemischen Speichers mit einer Hüllfolie gemäß einem Ausführungsbeispiel der vorliegenden Erfindung;
- Fig. 4B: eine Prinzipdarstellung eines Abschnitts des elektrochemischen Speichers aus Fig. 4A;
- Fig. 5: eine Prinzipdarstellung eines Abschnitts eines elektrochemischen Speichers mit einer Hüllfolie gemäß einem weiteren Ausführungsbeispiel der vorliegenden Erfindung;
- Fig. 6: eine Prinzipdarstellung eines Abschnitts eines elektrochemischen Speichers mit einer Hüllfolie gemäß einem weiteren Ausführungsbeispiel der vorliegenden Erfindung;
- Fig. 7: eine Prinzipdarstellung eines Abschnitts eines elektrochemischen Speichers mit einer Hüllfolie gemäß einem weiteren Ausführungsbeispiel der vorliegenden Erfindung;
- Fig. 8A-8C: Prinzipdarstellungen verschiedener Kontaktierungsmöglichkeiten eines Kraftsensors eines elektrochemischen Speichers mit einer Hüllfolie, gemäß Ausführungsbeispielen der vorliegenden Erfindung; und
- Fig. 9: ein Ablaufdiagramm eines Verfahrens zum Bestimmen einer Zustandsgröße eines elektrochemischen Speichers, gemäß einem Ausführungsbeispiel der vorliegenden Erfindung.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

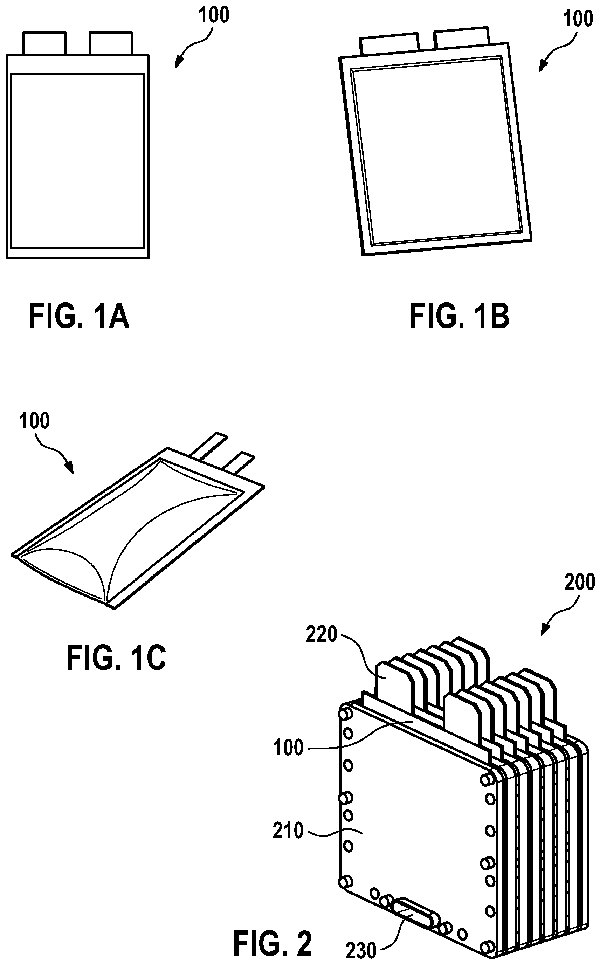

Die Figuren 1A bis 1C zeigen Illustrationen handelsüblicher Pouch-Zellen 100 in unterschiedlichen Ausführungsformen. Aus den Darstellungen ist ersichtlich, dass die Zellen 100 als sogenanntes Softpack ausgeführt sind, also kein starres Gehäuse, sondern eine flexible Ummantelung oder Hüllfolie aufweisen. Fig. 1C zeigt ein unter Gasentwicklung aufgeblähtes Softpack 100. Derartige Gasentwicklungen treten typischerweise auf, wenn eine Alterung der Zelle 100 einen kritischen Punkt erreicht hat und die Zelle 100 deaktiviert werden sollte bevor der Gasinnendruck ein Bersten des Softpacks und ein Austreten gefährlicher Zellbestandteile verursachen kann.

Fig. 2 zeigt in einer perspektivischen Darstellung ein elektrochemisches Speichersystem 200. Das elektrochemische Speichersystem 200 umfasst eine Mehrzahl von elektrochemischen Speichern in Form von Pouch-Zellen 100, wie sie in den Figuren 1A bis 1C beispielhaft dargestellt sind. Die elektrochemischen Speicher 100 sind in Form eines liegenden Stapels angeordnet und werden durch eine Rahmeneinrichtung 210 in ihrer jeweiligen Position fixiert. Die Pouch-Zellen 100 sind so von der Rahmeneinrichtung 210 eingefasst, dass lediglich Kontakte 220 zur elektrischen Anbindung des elektrochemischen Speichersystems 200 über eine Oberkante der Rahmeneinrichtung 210 hinausragen. In einem Bodenbereich weist die Rahmeneinrichtung 210 einen Abblaskanal 230 zur Ableitung von Wärme aus dem elektrochemischen Speichersystem 200 auf.

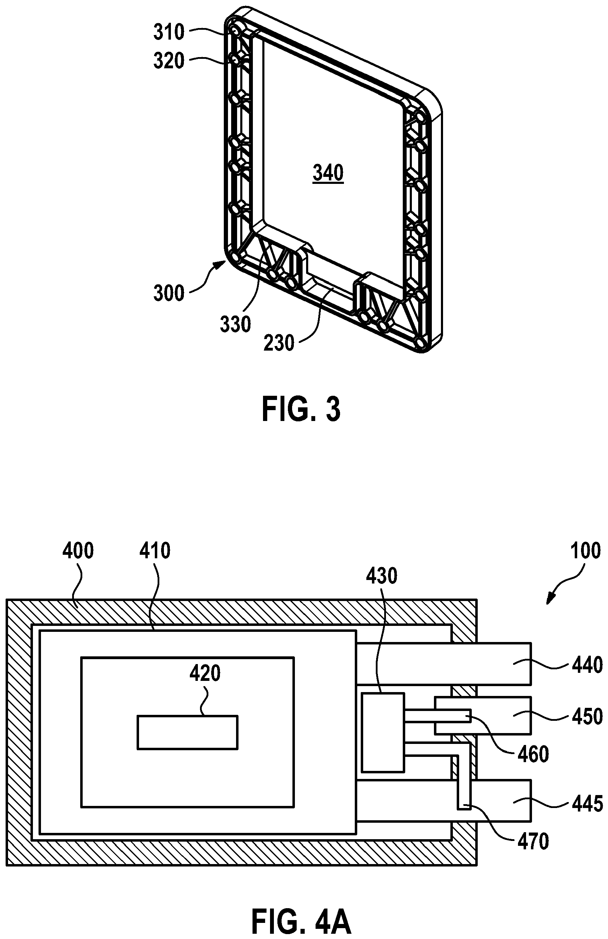

Fig. 3 zeigt anhand einer weiteren perspektivischen Darstellung ein Rahmenelement 300 der in Fig. 2 dargestellten Rahmeneinrichtung des elektrochemischen Speichersystems. Das Rahmenelement 300 ist ausgebildet, um zusammen mit einem weiteren derartigen Rahmenelement eine Pouch-Zelle sandwichartig einzufassen, wobei ein lichtes Maß des Rahmenelements 300 ausreichend groß ist, um ein durch Ladung und Entladung der Pouch-Zelle bedingtes sogenanntes Atmen der Zelle nicht zu behindern. Das hier gezeigte Ausführungsbeispiel des Rahmenelements 300 ist als Zwischenelement der in Fig. 2 gezeigten Rahmeneinrichtung konzipiert und umfasst neben der Öffnung für den bereits erläuterten Abblaskanal 230 ferner eine Schraubendurchführung 310 für eine Verbindung des Rahmenelements 300 mit einem weiteren Rahmenelement oder einer Abschlussplatte für die Rahmeneinrichtung, eine Durchlassöffnung für einen Kühlkanal 320 zum Leiten eines Kühlfluids durch das elektrochemische Speichersystem, eine Elastomerdichtung 330 zum geeigneten Abdichten des Batteriepacks und eine Aussparung 340 als Freiraum für eine Ausdehnung einer von dem Rahmenelement 300 eingefassten Pouch-Zelle. Die Darstellung des Rahmenelements 300 in Fig. 3 veranschaulicht, dass in auf diese Art konzipierten elektrochemischen Speichersystemen die einzelnen Pouch-Zellen sich an ihren Hauptflächen berühren und entsprechend eines jeweiligen Ladezustands einzelner Zellen wechselnde Drücke im gesamten Zellstapel bestehen und diesen in einem quer zu dem Rahmenelement 300 gerichteten Kraftpfad durchlaufen.

Fig. 4A zeigt in einer Prinzipdarstellung einen elektrochemischen Speicher 100 gemäß einem Ausführungsbeispiel der vorliegenden Erfindung. Der elektrochemische Speicher 100 ist als eine Pouch-Zelle ausgeführt und kann beispielsweise für das in Fig. 2 gezeigte elektrochemische Speichersystem eingesetzt werden. Der elektrochemische Speicher 100 umfasst eine Hüllfolie 400, ein galvanisches Element 410, einen ersten Foliensensor bzw. Kraftsensor 420, einen zweiten Foliensensor bzw. Kraftsensor 430 sowie eine erste Elektrode 440 und eine zweite Elektrode 445 zur elektrischen Anbindung des galvanischen Elements 410. Bei dem in Fig. 4A gezeigten Ausführungsbeispiel des elektrochemischen Speichers 100 bildet die in der Darstellung oben abgebildete Elektrode 440 die Kathode und die in der Darstellung unten abgebildete Elektrode 445 die Anode. Wie bereits erläutert umschließt die Hüllfolie 400 das galvanische Element 410, ist hier jedoch aus Gründen der Anschaulichkeit lediglich als ein das galvanische Element 410 umgebender Rahmen dargestellt. Der in der Figur sichtbare Bereich der Hüllfolie 400 kennzeichnet hier gleichzeitig Endabschnitte von Randbereichen der Hüllfolie. Das galvanische Element 410 weist einen Zellwickel zum Erzeugen elektrischer Energie aus chemischer Energie auf. Ferner ist ein Zusatzkontakt 450 zur Spannungsvorsorgung des zweiten Kraftsensors 430 gezeigt. Dazu ist der zweite Kraftsensor 430 über einen ersten Anschluss 460 mit dem Zusatzkontakt 450 verbunden und über einen zweiten Anschluss 470 mit der Anode 445 verbunden. Die Spannungsversorgung des ersten Kraftsensors 420 ist in der Darstellung in Fig. 4A nicht gezeigt. Beispielsweise kann sie an einer für das Auge nicht sichtbaren Innenseite der Hüllfolie 400 angeordnet sein.

Aus Fig. 4A ist ersichtlich, dass der erste Kraftsensor 420 in einem Mittelbereich der Hüllfolie 400 angeordnet ist, wobei wie einleitend erläutert mit dem Begriff "Mittelbereich" der mittlere Bereich bei Draufsicht auf die Hüllfolie gemeint ist. Hierbei handelt es sich bei der Draufsicht um die Ansicht auf die Fläche der Hüllfolie mit der größten Ausdehnung. Der erste Kraftsensor 420 liegt somit in dem in Zusammenhang mit Fig. 3 erläuterten Kraftpfad einer Mehrzahl von aufeinandergestapelten Pouch-Zellen 100. Der erste Kraftsensor 420 misst hierbei eine Kraft, die durch eine Volumenänderung von - in der Darstellung in Fig. 4A nicht gezeigten - Zelllagen, also einem Stapel aus einer Mehrzahl von Pouch-Zellen 100 entsteht. Die Kraft kann z. B. kapazitiv, piezoresistiv oder resistiv erfasst werden, für die resistive Erfassung z. B. unter Verwendung eines Touchscreens, das auf einen Druck, der zwei elektrisch leitfähige Schichten stellenweise verbindet, reagiert, oder mithilfe eines Spannungsteilers. Ein so gewonnener Messwert erlaubt mit geeigneter Auswertung eine Bestimmung des SOC des elektrochemischen Speichers 100. Der zweite Kraftsensor 430 liegt außerhalb des Kraftpfades in einem Randbereich der Hüllfolie 400 und somit an einer Stelle, an der sich die Hülle 400 der Zelle 100 ungehindert durch andere Zellen 100 eines Stapels ausdehnen kann. An dieser Stelle kann ein Einfluss eines Gasinnendruckes der Pouch-Zelle 100 erfasst werden, und zwar über eine Dehnung, die er in der Hüllfolie 400 hervorruft. So kann hier mit geeigneter Auswertung eines erfassten Messwerts eine Bestimmung des Gesundheitszustands des elektrochemischen Speichers 100 erfolgen. Bei dem hier gezeigten Ausführungsbeispiel ist der zweite Kraftsensor 430 auf die Hüllfolie 400 aufgedruckt. Alternativ kann auch ein MEMS-Element zur Krafterfassung aufgebracht werden, und zwar an der Innenseite oder der Außenseite der Hüllfolie 400. Bei dem ersten Kraftsensor 420 und dem zweiten Kraftsensor 430 erfolgt die Erfassung jeweils basierend auf einer Dehnung eines in den Sensoren eingesetzten Dehnungsmessstreifens (DMS).

Prinzipiell können beide Foliensensoren 420, 430 auf die Innen- oder Außenseite der Hüllfolie 400 aufgebracht werden. Eine Temperatursensierung kann dabei separat über einen Foliensensor erfolgen, z. B. lokal oder über ein Array. Die Sensierung kann z. B. resistiv durchgeführt werden, über einen Widerstand, der sich nur über die Temperatur ändert.. Gemäß in den Figuren nicht gezeigten Ausführungsformen des elektrochemischen Speichers 100 können die Anschlüsse 460, 470 des ersten Kraftsensors 420 oder des zweiten Kraftsensors 430 oder beider Kraftsensoren 420, 430 bei innenliegender Anordnung der Sensoren 420, 430 nach außen geführt werden. Alternativ können die Anschlüsse 460, 470 ausschließlich innerhalb der Hüllfolie 400 der Pouch-Zelle 100 platziert sein und innerhalb der Pouch-Zelle 100 an eine Hauptstromleitung bzw. Powerline des elektrochemischen Speichers 100 angeschlossen sein. Selbstverständlich können die Anschlüsse 460, 470 der nutzenden FolienSensoren 420, 430 auf oder auch innerhalb der Pouch-Zelle 100 geführt werden.

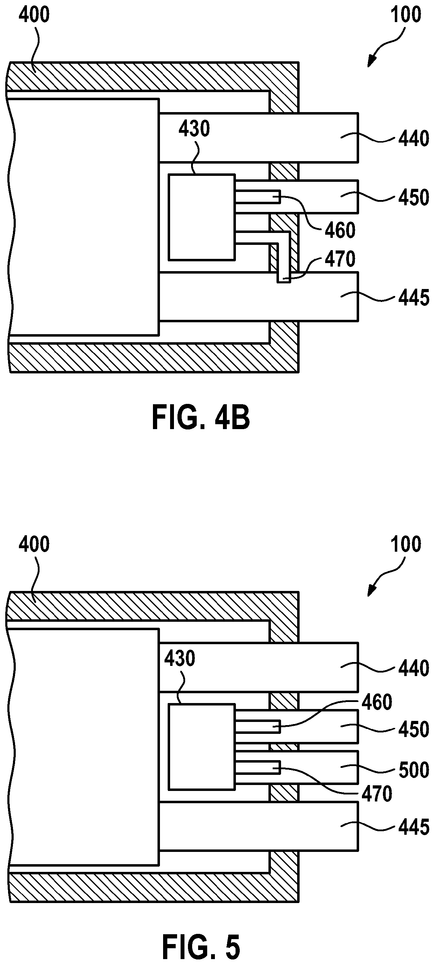

Fig. 4B zeigt anhand einer weiteren Prinzipdarstellung einen Abschnitt des elektrochemischen Speichers 100 aus Fig. 4A. Die Detailansicht zeigt einen vorderen bzw. in der Darstellung in Fig. 4A rechten Bereich der Pouch-Zelle 100 zur Veranschaulichung der bei diesem Ausführungsbeispiel gewählten Kontaktierungsvariante der Foliensensoren am Beispiel des zweiten Kraftsensors 230. Die Darstellung in Fig. 4B ist ein Querschnitt an der äußeren Hülle 400 der Pouch-Zelle 100 und zeigt wie bereits Fig. 4A ein Innenleben der Pouch-Zelle 100. Wie bereits erläutert ist der Kraftsensor 430 über den ersten Anschluss 460 mit dem Zusatzkontakt 450 verbunden und über den zweiten Anschluss 470 mit der Anode 445 verbunden. Wie die Darstellung in Fig. 4B zeigt, durchbrechen die Kathode 440, die Anode 445 sowie der Zusatzkontakt 450 an einer Seite den Randbereich der Hüllfolie 400. Eine Siegelnaht bzw. ein Seal-Rahmen sorgt für einen fluiddichten Verschluss der Hüllfolie 400 und presst die metallenen Kontakte 440, 445, 450 und eine z. B. leitfähige Beschichtung einer Innenseite der Hülle 400 zusammen. Auf diese Weise kann bei fluiddichter Abdichtung eine elektrische Kontaktierung der Zelle 100 sowie des Sensors 430 erzielt werden. Bei einem Riss oder einem sonstigen Versagen der Schweißnaht im Bereich der Folienschweißverbindung, z. B. aufgrund einer starken Entgasung im elektrischen Element 410, wird einer oder alle der elektrischen Kontakte 440, 445, 450 durchtrennt. Ein dadurch ausgelöstes Signal kann z. B. ein Batteriemanagementsystem auf einen Zelldefekt hinweisen. Alternativ kann diese Funktionalität auch an einer beliebigen anderen Stelle des elektrochemischen Speichers 100 vorgesehen sein. Die Kontakte 440, 445, 450 sind hier auf die innen liegende Fläche der Hüllfolie 400 aufgedruckt. Dabei erstrecken sich die Kontakte 440, 445, 450 über einen Rand der Hüllfolie 400 hinaus.

Fig. 5 zeigt anhand einer weiteren Prinzipdarstellung des Abschnitts des elektrochemischen Speichers 100 aus Fig. 4B eine weitere Kontaktierungsmöglichkeit des zweiten Sensors 430. Neben dem Zusatzkontakt 450 wird hier ein weiterer Zusatzkontakt 500 verwendet. Im Gegensatz zu dem in Fig. 4B gezeigten Ausführungsbeispiel der Pouch-Zelle 100 verbindet hier der zweite Anschluss 470 den Sensor 430 nicht mit der Anode 445, sondern mit dem weiteren Zusatzkontakt 500.

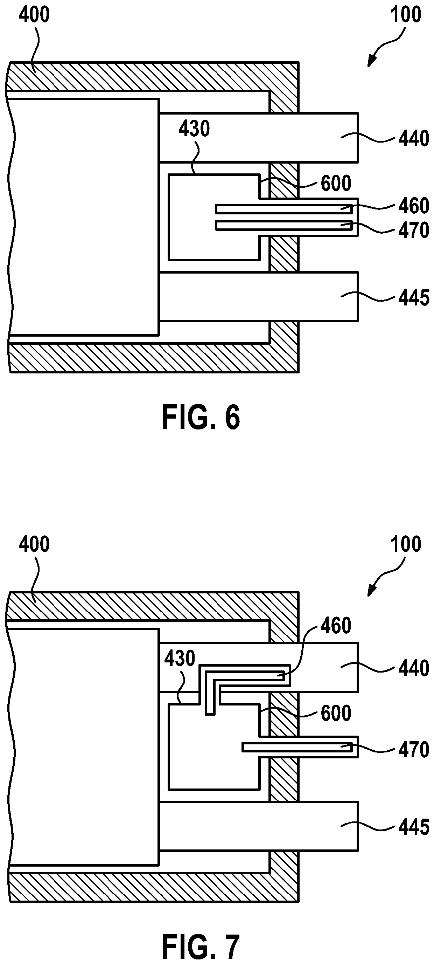

Die Figuren 6 und 7 zeigen Detailansichten zur Veranschaulichung möglicher Kontaktierungsvarianten der Foliensensoren am Beispiel des Kraftsensors 430, der hier als ein integrierter Gasdrucksensor ausgebildet ist. Wiederum zeigen die Darstellungen einen Querschnitt an der äußeren Hülle 400 der Pouch-Zelle 100. In beiden Figuren ist hier der Kraftsensor bzw. Gasdrucksensor 430 mit einer separaten eingebrachten Trägerfolie 600 ausgeführt. Die Folie 600 ist flexibel und behindert somit nicht eine Dehnung eines in dem Kraftsensor 460 verwendeten Dehnungsmessstreifens. Wie aus den Darstellungen in den Figuren 6 und 7 ersichtlich ist, bedeckt bzw. umschließt die flexible Trägerfolie 600 den Sensor 430 vollständig. Alternativ kann auf die Trägerfolie 600 auch ein MEMS-Sensorelement (MEMS = mikroelektromechanisches System) zur Dehnungserfassung appliziert sein.

Fig. 6 zeigt ein Ausführungsbeispiel des elektrochemischen Speichers 100 mit dem folienapplizierten Gasdrucksensor 230, bei dem der erste Anschluss 460 und der zweite Anschluss 470 jeweils eigenständige Kontakte zur Spannungsversorgung des Gasdrucksensors 430 bilden.

Das in Fig. 7 gezeigte Ausführungsbeispiel unterscheidet sich von dem in Fig. 6 gezeigten insofern, als hier der erste Anschluss 460 den Gasdrucksensor 230 mit der Kathode 440 verbindet.

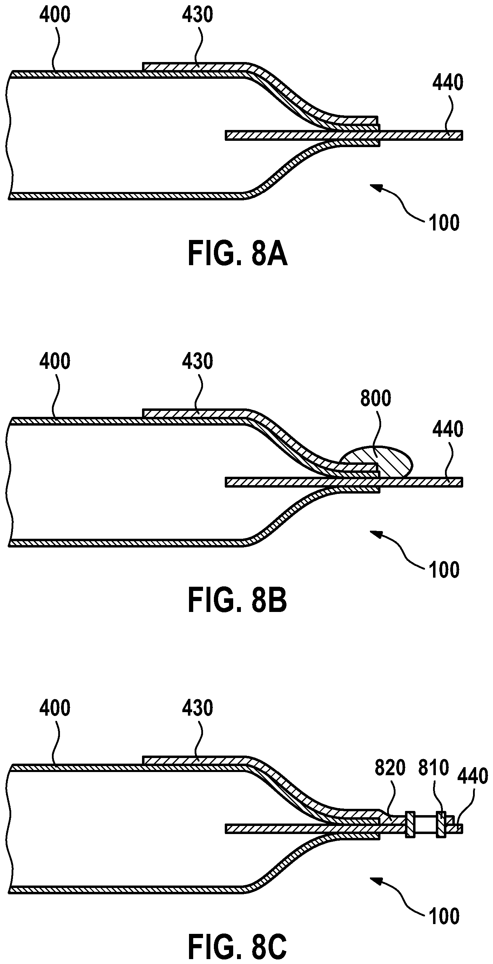

Die Figuren 8A bis 8C zeigen Prinzipdarstellungen verschiedener Kontaktierungsmöglichkeiten eines Kraftsensors eines elektrochemischen Speichers mit einer Hüllfolie. Dargestellt ist jeweils in einer Querschnittansicht der bereits in den Figuren 4B bis 7 gezeigte Abschnitt des elektrochemischen Speichers 100, um 90 Grad gekippt. Exemplarisch sei hier eine Kontaktierung des Kraftsensors 430 mit der Kathode 440 beleuchtet. Der Kraftsensor 430 ist bei den in den Figuren 8A bis 8C gezeigten Ausführungsbeispielen stets auf einer Außenseite der Hüllfolie 400 angeordnet.

Fig. 8A stellt eine Ausgangssituation vor einer elektrischen Kontaktierung des Kraftsensors 430 dar. Die Herausforderung hierbei ist eine Herstellung eines zuverlässigen elektrischen Kontakts zwischen einem elektrischen Anschluss des Kraftsensors 430 und der Elektrode 440.

Fig. 8B zeigt eine Herstellung des Kontakts über eine Leitkleberverbindung 800. Die Leitkleberverbindung 800 stellt eine elektrisch leitfähige Verbindung zwischen einem elektrischen Anschluss des Kraftsensors 430 und der Elektrode 440 her.

Fig. 8C zeigt eine Herstellung des Kontakts über eine Art Stanzkontakt bzw. Durchkontakt 810. Hier wird zur Überbrückung eine aufgeklebte Zusatzfolie 820 verwendet. Wird die Kontaktierung im Bereich einer Schweißnaht der Hüllfolie 400 hergestellt, kann auf die Zusatzfolie 820 auch verzichtet werden. Alternativ können anstelle der Zusatzfolie 820 auch Dickfilmpasten, Bonddrähte und - bänder genutzt werden.

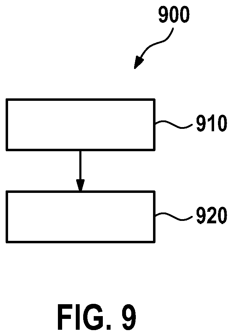

Fig. 9 zeigt ein Ausführungsbeispiel eines Ablaufdiagramms eines Verfahrens 900 zum Bestimmen zumindest einer Zustandsgröße eines elektrochemischen Speichers. Das Verfahren wird bei einem anhand der vorangegangenen Figuren erläuterten elektrochemischen Speicher eingesetzt, der ein von einer Hüllfolie umschlossenes galvanisches Element aufweist. In einem ersten Schritt 910 wird ein Dehnungszustand der Hüllfolie erfasst. Dabei kann der Dehnungszustand der Hüllfolie an unterschiedlichen Positionen der Hüllfolie, z. B. in einem Mittelbereich und in einem Randbereich - gleichzeitig oder zeitlich versetzt - erfasst werden, um unterschiedliche Zustandsgrößen des elektrochemischen Speichers erfassen zu können. Basierend auf dem Dehnungszustand kann in einem folgenden Schritt 920 zumindest eine Zustandsgröße des elektrochemischen Speichers ermittelt werden. Entsprechend kann mit einer Zustandsgröße, die basierend auf der Messung in dem Mittelbereich der Hüllfolie ermittelt wurde, auf einen Ladezustand des elektrochemischen Speichers rückgeschlossen werden, während eine Zustandsgröße, die basierend auf der Messung in dem Randbereich der Hüllfolie ermittelt wurde, Hinweise auf einen Alterszustand bzw. Gesundheitszustand des elektrochemischen Speichers gibt.

Das Verfahren 900 ist so ausgelegt, dass die Tatsache berücksichtigt wird, dass sich innerhalb eines Pouch-Zellen-Stacks die Drücke und Kräfte gegenseitig beeinflussen. Das Verfahren 900 liefert auch dann aussagekräftige Messwerte, wenn die genutzten Foliensensoren über die Zellspannung versorgt werden. Das Verfahren 900 kann beinhalten, dass die Signalkommunikation vorzugsweise über die Powerline erfolgt, wobei dann beide Kontakte der Sensoren bzw. einer integrierten Auswerteelektronik an die Zellpole angeschlossen sind. Gemäß weiterer Ausführungsbeispiele ist das Verfahren 900 so konzipiert, dass die Zustandsüberwachung (Überschreitung kritischer Referenzwerte) über eine Auswerteeinheit (ASIC) ein Warnsignal an das Batteriemanagement weitergibt, oder dass ein periodischer Abgleich des Innendrucksensors bzw. Gasdrucksensors mit dem Außendruck erfolgt. Auch kann das Verfahren 900 beinhalten, dass ein detektierter Verlust der Hermitezität oder ein kritischer Gesundheitszustand dem zentralen Fahrzeugsteuergerät und/oder dem Fahrer, z. B. über eine Warnleuchte, mitgeteilt wird, oder dass bei einem kritischen detektierten Verlust der Hermitezität oder einem kritischen Gesundheitszustand eine Abkopplung bzw. Überbrückung der beschädigten Zelle erfolgt. Ferner zeigt eine Ausführung ein Heranziehen von Messwerten eines (Niederdruck-) Außendruckensors zum Vergleich mit den Messwerten des Pouch-Zellen-Sensors bzw. Gasinnendrucksensors durch die Abgleichfunktion. Bei einem weiteren Ausführungsbeispiel erfolgt der Abgleich z. B. im Nachlauf während des Grundzustands der Batterie. Auch wird in einer weiteren Ausführung zur Verrechnung der Messwerte ein Kennfeld eingesetzt, welches mindestens einen, z. B. aus Messfahrten erhaltenen, empirischen Datenwert enthält, sodass ein exemplarspezifischer Abgleich des Systems Pouch-Zelle - Foliensensor durchgeführt werden kann. Alternativ kann auch auf den Gasdrucksensor verzichtet werden und der Gesundheitszustand bzw. Gasdruck über eine Mittelung über Lade- bzw. Entladezyklen berechnet werden.

Das Verfahren 900 kann unabhängig davon eingesetzt werden, ob Sensorfolien in oder auf Pouch-Zellen angeordnet sind, und ermöglicht einen Einsatz des Folien-Sensors zur Überwachung von mechanischen Spannungen, bevor es aufgrund von resultierenden Belastungen zu einem Riss der Außenhülle kommt. Entsprechend kann eine Minimierung des Sicherheitsrisikos erzielt werden. Auch ein kontrollierbares schnelleres Laden und Entladen der Batteriezellen kann aufgrund der Detektion der Druckverhältnisse realisiert werden.

Die beschriebenen und in den Figuren gezeigten Ausführungsbeispiele sind nur beispielhaft gewählt. Unterschiedliche Ausführungsbeispiele können vollständig oder in Bezug auf einzelne Merkmale miteinander kombiniert werden. Auch kann ein Ausführungsbeispiel durch Merkmale eines weiteren Ausführungsbeispiels ergänzt werden. Ferner können erfindungsgemäße Verfahrensschritte wiederholt sowie in einer anderen als in der beschriebenen Reihenfolge ausgeführt werden.

## Patentansprüche

1. Galvanisches Element mit einer Hüllfolie, wobei die Hüllfolie mindestens einen Kraftsensor (420, 430) zum Erfassen eines Dehnungszustands der Hüllfolie aufweist und wobei der Kraftsensor (420, 430) in einem Mittelbereich der Hüllfolie angeordnet ist, **dadurch gekennzeichnet, dass** ein weiterer Kraftsensor (420, 430) in einem Randbereich der Hüllfolie angeordnet ist, wobei der Randbereich als ein Durchführungsbereich für mindestens einen elektrischen Kontakt (440, 445) eines galvanischen Elements (410) ausgebildet ist.

2. Galvanisches Element gemäß Anspruch 1, wobei der Kraftsensor (420, 430) einen Dehnungsmessstreifen aufweist.

3. Galvanisches Element gemäß einem der vorangegangenen Ansprüche, wobei der Kraftsensor (420, 430) an einer Oberfläche der Hüllfolie angeordnet ist.

4. Galvanisches Element gemäß einem der vorangegangenen Ansprüche, wobei die Hüllfolie (400) eine Sollbruchstelle aufweist, wobei ein elektrischer Kontakt (450; 500) für eine elektrische Anbindung des Kraftsensors (420, 430) in einem Bereich der Sollbruchstelle angeordnet ist.

5. Elektrochemischer Speicher (100) zur Umwandlung von chemischer Energie in elektrische Energie, wobei der elektrochemische Speicher folgende Merkmale aufweist:
ein galvanisches Element mit einer Hüllfolie gemäß einem der vorangegangenen Ansprüche, wobei der Dehnungszustand der Hüllfolie eine Zustandsgröße des galvanischen Elements repräsentiert.

6. Elektrochemischer Speicher (100) gemäß Anspruch 5, bei dem ein elektrischer Kontakt des galvanischen Elements mit einem elektrischen Anschluss des Kraftsensors elektrisch leitfähig verbunden ist.

7. Elektrochemischer Speicher (100) gemäß Anspruch 6, mit zumindest einem weiteren Sensor, insbesondere einem Temperatursensor, einem PH-Wert-Sensor und/oder einem Halbzellenspannungs-Messsensor, wobei der elektrische Kontakt des galvanischen Elements mit einem elektrischen Anschluss eines des zumindest einen weiteren Sensors elektrisch leitfähig verbunden ist.

8. Elektrochemisches Speichersystem (200) zur Umwandlung von chemischer Energie in elektrische Energie, wobei das elektrochemische Speichersystem folgende Merkmale aufweist:
eine Mehrzahl von elektrochemischen Speichern (100) gemäß Anspruch 5, die in Form eines Stapels angeordnet sind; und
eine Rahmeneinrichtung (210) zum Fixieren einer Position jedes der Mehrzahl von elektrochemischen Speichern in dem Stapel.

9. Verfahren (900) zum Bestimmen einer Zustandsgröße eines elektrochemischen Speichers (100) zur Umwandlung von chemischer Energie in elektrische Energie, wobei der elektrochemische Speicher ein von einer Hüllfolie (400) umschlossenes galvanisches Element (410) aufweist, und wobei das Verfahren die folgenden Schritte umfasst:
Erfassen (910) eines ersten Dehnungszustands in einem Mittelbereich einer Hauptseite der Hüllfolie (400)
**dadurch gekennzeichnet, dass** das Verfahren die folgenden weiteren Schritte umfasst:
Ermitteln eines zweiten Dehnungszustands in einem Randbereich einer Hauptseite der Hüllfolie; und Ermitteln (920) einer ersten Zustandsgröße basierend auf dem ersten Dehnungszustand und einer zweiten Zustandsgröße basierend auf dem zweiten Dehnungszustand, wobei die erste Zustandsgröße einen Ladezustand des elektrochemischen Speichers (100) repräsentiert und die zweite Zustandsgröße einen Alterungszustand des elektrochemischen Speichers repräsentiert.

## Claims

1. Galvanic element with an enveloping film, wherein the enveloping film has at least one force sensor (420, 430) for detecting a state of expansion of the enveloping film, and wherein the force sensor (420, 430) is arranged in a central region of the enveloping film, **characterized in that** a further force sensor (420, 430) is arranged in an edge region of the enveloping film, wherein the edge region is designed as a bushing region for at least one electrical contact (440, 445) of a galvanic element (410) .

2. Galvanic element according to Claim 1, wherein the force sensor (420, 430) has a strain gauge.

3. Galvanic element according to either of the preceding claims, wherein the force sensor (420, 430) is arranged on a surface of the enveloping film.

4. Galvanic element according to one of the preceding claims, wherein the enveloping film (400) has a predetermined breaking point, wherein an electrical contact (450; 500) for electrical connection of the force sensor (420, 430) is arranged in a region of the predetermined breaking point.

5. Electrochemical storage device (100) for converting chemical energy into electrical energy, wherein the electrochemical storage device has the following features:
a galvanic element with an enveloping film according to one of the preceding claims,
wherein the state of expansion of the enveloping film represents a state variable of the galvanic element.

6. Electrochemical storage device (100) according to Claim 5, in which an electrical contact of the galvanic element is electrically conductively connected to an electrical connection of the force sensor.

7. Electrochemical storage device (100) according to Claim 6, comprising at least one further sensor, in particular a temperature sensor, a pH value sensor and/or a half-cell voltage measurement sensor, wherein the electrical contact of the galvanic element is electrically conductively connected to an electrical connection of one of the at least one further sensors.

8. Electrochemical storage system (200) for converting chemical energy into electrical energy, wherein the electrochemical storage system has the following features:
a plurality of electrochemical storage devices (100) according to Claim 5 which are arranged in the form of a stack; and
a frame device (210) for fixing a position of each of the plurality of electrochemical storage devices in the stack.

9. Method (900) for determining a state variable of an electrochemical storage device (100) for converting chemical energy into electrical energy, wherein the electrochemical storage device has a galvanic element (410) which is enclosed by an enveloping film (400), and wherein the method comprises the following steps:
detecting (910) a first state of expansion in a central region of a main side of the enveloping film (400), **characterized in that** the method comprises the following further steps:
ascertaining a second state of expansion in an edge region of a main side of the enveloping film; and
ascertaining (920) a first state variable based on the first state of expansion and a second state variable based on the second state of expansion, wherein the first state variable represents a state of charge of the electrochemical storage device (100) and the second state variable represents a state of ageing of the electrochemical storage device.

## Revendications

1. Elément galvanique avec film enveloppant, dans lequel le film enveloppant présente au moins un capteur de force (420, 430) pour détecter un état d'allongement du film enveloppant et dans lequel le capteur de force (420, 430) est disposé dans une région centrale du film enveloppant, **caractérisé en ce qu'**un autre capteur de force (420, 430) est disposé dans une région de bord du film enveloppant, dans lequel la région de bord est réalisée par une région de traversée pour au moins un contact électrique (440, 445) d'un élément galvanique (410) .

2. Elément galvanique selon la revendication 1, dans lequel le capteur de force (420, 430) présente une jauge extensométrique.

3. Elément galvanique selon l'une quelconque des revendications précédentes, dans lequel le capteur de force (420, 430) est disposé sur une surface du film enveloppant.

4. Elément galvanique selon l'une quelconque des revendications précédentes, dans lequel le film enveloppant (400) présente un point de rupture théorique, dans lequel un contact électrique (450; 500) destiné à une liaison électrique du capteur de force (420, 430) est disposé dans une région du point de rupture théorique.

5. Accumulateur électrochimique (100) permettant la conversion d'énergie chimique en énergie électrique, dans lequel l'accumulateur électrochimique présente les caractéristiques suivantes:
un élément galvanique avec un film enveloppant selon l'une quelconque des revendications précédentes, dans lequel l'état d'allongement du film enveloppant représente une grandeur d'état de l'élément galvanique.

6. Accumulateur électrochimique (100) selon la revendication 5, dans lequel un contact électrique de l'élément galvanique est connecté en liaison électriquement conductrice à un raccord électrique du capteur de force.

7. Accumulateur électrochimique (100) selon la revendication 6, avec au moins un autre capteur, en particulier un capteur de température, un détecteur de pH et/ou un capteur de mesure de tension de demi-cellule, dans lequel le contact électrique de l'élément galvanique est connecté en liaison électriquement conductrice à un raccord électrique d'un desdits au moins un autre capteur.

8. Système d'accumulateur électrochimique (200) permettant de convertir de l'énergie chimique en énergie électrique, dans lequel le système d'accumulateur électrochimique présente les caractéristiques suivantes:
une multiplicité d'accumulateurs électrochimiques (100) selon la revendication 5, qui sont disposés sous forme d'empilement; et
un dispositif de cadre (210) pour fixer une position de chacun de la multiplicité d'accumulateurs électrochimiques dans l'empilement.

9. Procédé (900) de détermination d'une grandeur d'état d'un accumulateur électrochimique (100) permettant de convertir de l'énergie chimique en énergie électrique, dans lequel l'accumulateur électrochimique présente un élément galvanique (410) entouré par un film enveloppant (400), et dans lequel le procédé comprend l'étape suivante:
détecter (910) un premier état d'allongement dans une région centrale d'un côté principal du film enveloppant (400),
**caractérisé en ce que** le procédé comprend les étapes supplémentaires suivantes:
déterminer un deuxième état d'allongement dans une région de bord d'un côté principal du film enveloppant; et
déterminer (920) une première grandeur d'état sur la base du premier état d'allongement et une deuxième grandeur d'état sur la base du deuxième état d'allongement, dans lequel la première grandeur d'état représente un état de charge de l'accumulateur électrochimique (100) et la deuxième grandeur d'état représente un état de vieillissement de l'accumulateur électrochimique.
